# EUROPEAN PATENT SPECIFICATION

(11) **EP 3 272 727 B1**
(45) Date of publication and mention of the grant of the patent: **21.08.2024**
(21) Application number: 16382349.5
(22) Date of filing: 19.07.2016
(51) Int. Cl.: C05D 9/02, C05F 11/02, C08H 99/00, C08H 7/00

(54) **PROCEDURE FOR OBTAINING HUMIC ACIDS WITH HIGH METAL ION COMPLEXATION CAPACITY AND PRODUCT OBTAINED USING SAID PROCEDURE**
VERFAHREN ZUR HERSTELLUNG VON HUMINSÄUREN MIT HOHER METALLIONENKOMPLEXIERUNGSKAPAZITÄT UND DURCH VERWENDUNG DES BESAGTEN VERFAHRENS GEWONNENES PRODUKT
PROCÉDÉ D'OBTENTION D'ACIDES HUMIQUES À FORTE CAPACITÉ DE COMPLEXATION IONIQUE MÉTALLIQUE ET PRODUIT OBTENU PAR CE PROCÉDÉ

(43) Date of publication of application: 24.01.2018
(73) Proprietor: FERTINAGRO BIOTECH, S.L., 44195 Teruel (ES)
(72) Inventor: ATARES REAL, Sergio, 44195 Teruel (ES); NARANJO OLIVERO, Miguel Angel, 44195 Teruel (ES); FERRER GINES, María, 44195 Teruel (ES); ROMERO LOPEZ, Joaquin, 44195 Teruel (ES); SALAET MADORRAN, Ignasi, 44195 Teruel (ES); MARTIN PEREZ, Julia Raquel, 44195 Teruel (ES)
(74) Representative: González López-Menchero, Álvaro Luis

(56) References cited:
- EP-A2- 0 282 250
- EP-A2- 0 786 491
- DE-A1- 10 123 283
- US-A- 5 026 416
- DATABASE WPI Week 201079, Derwent World Patents Index; AN 2010-P45702, XP002765953

## Description

The present invention relates to a procedure for obtaining humic acids with greater metal ion complexation capacity, Also described is a product containing metal ions complexed with humic acids obtained from the application of the procedure.

More specifically, the invention provides a procedure for obtaining humic acids extracted from leonardites which have greater capacity to form complexes with metal ions of interest in agriculture, such as iron, manganese or zinc. The procedure of the invention makes it possible to improve the complexation of metal ions through selective activation and purification, which increases the capacity of the complex-forming functional groups present in humic acids to form complexes with said metal ions.

Humic acids are complex macromolecular groups that form part of the organic matter in the soil and that improve the absorption of macronutrients, thereby stimulating plant growth. The extraction, characterisation and properties of the humic acids are described, for example, in documents US3398186 A, US3544296 A and EP0284339 B1.

Extraction of humic acids from coal derived materials is also described in documents EP0786491A2, US5026416A, EP0282250A2 and DE10123283A1.

Usually, the extraction of humic acids from leonardites consists essentially of an extraction in a basic medium at a high pH, normally potassium hydroxide. Briefly, a base (for example, KOH) is added to the leonardite sample to be extracted and, after the extraction, it is purified, normally by centrifuging, to remove the insoluble portion, which essentially consists of fulvic substances, insoluble in a basic medium, filtering the supernatant. For its part, the fraction soluble in a basic medium (the supernatant) essentially contains humic substances. Subsequently, the insoluble fraction is acidified and purified to obtain a soluble fraction in an acid medium consisting of fulvic substances. Therefore, the known methods entail the consecutive extraction and purification, respectively in a basic medium and in an acid medium, to obtain two products, which can subsequently be combined to obtain a mixture.

These conventional processes are conditioned by the fact that the humic substances have two basic components: humic acids and fulvic acids. Basically, it can be said that humic acids are larger macromolecules than fulvic acids, which have greater carbon and nitrogen content, and that fulvic acids have a higher percentage of oxygen in their structures than humic acids. This greater content in oxygen of fulvic acids increases their acidity and metal-retaining capacity. But the greater weight of humic acids leads to a series of properties related to the colloidal state very different to those of fulvic acids, such as: greater cationic exchange capacity and greater water-retaining capacity. As a result, the sequestrant capacity of metals is much higher in fulvic acids than in humic acids, due to which they are used with foliar fertilisers for foliar applications. Humic acids, due to their much higher molecular weight, have very different colloidal status-related properties to those of fulvic acids. Their cationic exchange capacity, for example, is greater. Also their water-retaining capacity. Fulvic acids act basically on the aerial part of the plant, while humic acids significantly influence the soil and therefore influence the development of the aerial part.

In some cases, an additional acidifying stage is carried out to precipitate the previously extracted soluble humic acids. Therefore, products formed by a mixture of soluble humic acids and soluble fulvic acids can be found on the market.

In this regard, it should be noted that all humic acids have the same complexation capacity, due to which the procedure of the present invention makes it possible to modify these humic acids to acquire this capacity, being a differentiating characteristic from other conventional humic acids. Therefore, the humic acids are modified to reinforce the functional groups thereof that contribute to complexation.

There are many documents in which this complexation capacity of humic acids with metal ions is studied. In this regard, see, for example, Fang, K., Yuan, D., Zhang, L., Feng, L., Chen, Y., & Wang, Y., Science, Direct effect of environmental factors on the complexation of iron and humic acid. JES, 27, 188-196, 2014; Fuentes, M., Olaetxea, M., Baigorri, R., Zamarreño, A. M., Etienne, P., Lame, P.,... Garcia-Mina, J. M., Main binding sites involved in Fe ( III ) and Cu (II) complexation in humic-based structures, Journal of Geochemical Exploration, 129, 14-17,2014; Kalina, M., Klu, M., & Sedla, P., Geoderma Utilization of fractional extraction for characterization of the interactions between humic acids and metals, 208, 92-98, 2013 and Fakour, H., & Lin, T., Experimental determination and modeling of arsenic complexation with humic and fulvic acids. Journal of Hazardous Materials, 279, 569-578, 2014.

The invention provides a procedure for obtaining humic acids extracted from leonardites that have greater capacity to form complexes with metal ions, said procedure including selective activation, extraction and purification that increases the capacity of the complex-forming functional groups present in humic acids to form complexes with said metal ions. The procedure of the invention essentially includes a first molturation stage in leonardite liquid and two extraction stages based on a basic pH gradient.

In the figures:
- FIGURE 1.: Shows an IR spectrum of European leonardite (Teruel, Spain), indicating the functional groups that influence the reactivity of the process of the invention;
- FIGURE 2.: Shows an IR spectrum of Asian leonardite, indicating the functional groups that influence the reactivity of the process of the invention;
- FIGURE 3.: Shows an IR spectrum of American leonardite, indicating the functional groups that influence the reactivity of the process of the invention;
- FIGURE 4.: Shows an IR spectrum of European leonardite (Teruel, Spain), indicating the reinforced functional groups after the application of the procedure of the invention and that influence the reactivity of the process of the invention;
- FIGURE 5.: Shows a diagram of the extraction procedure according to a form of embodiment of the invention;
- FIGURE 6.: Shows microphotographs showing images of leonardite not treated by the process of the invention;
- FIGURE 7.: Shows images of the same leonardite upon completion of the first purification stage by means of filtering, where it has already precipitated and the main functional groups have been activated and the first extraction has been performed;
- FIGURE 8.: Shows microphotographs showing images of the same leonardite upon completion of the second extraction process and the sample is ready for the addition of different micronutrients; and
- FIGURE 9.: Shows graphs showing particle size distribution before (A) and after (B) the process of the invention.

In order to carry out the activation, extraction and purification process of the invention, a certain leonardite initially having characteristics that make it possible, with the process of invention, to obtain minimum reactivity values in reference to the functional groups capable of forming complexes with metal ions is particularly appropriate.

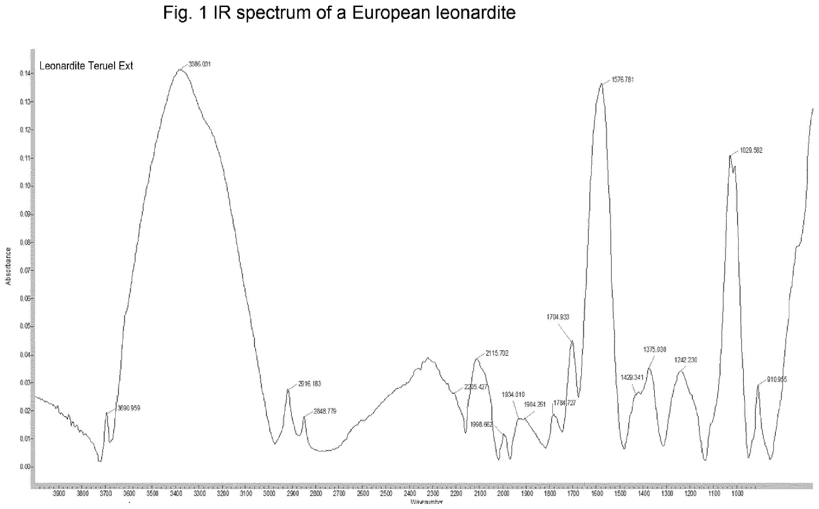

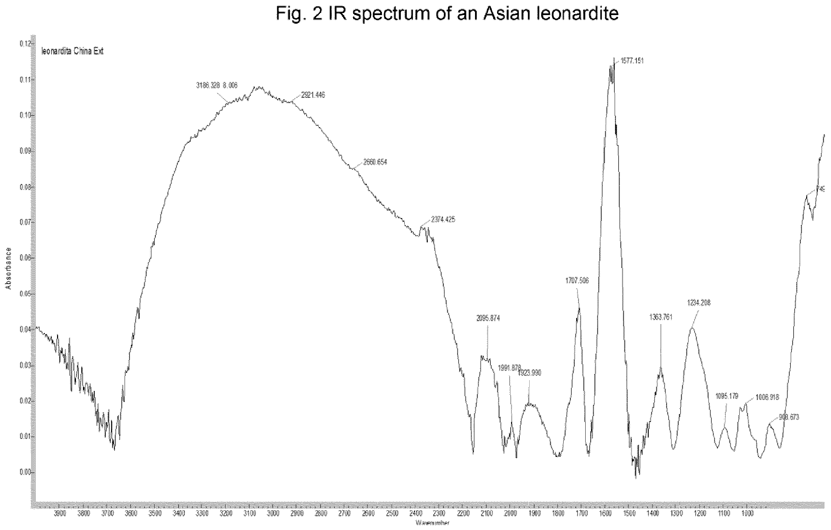

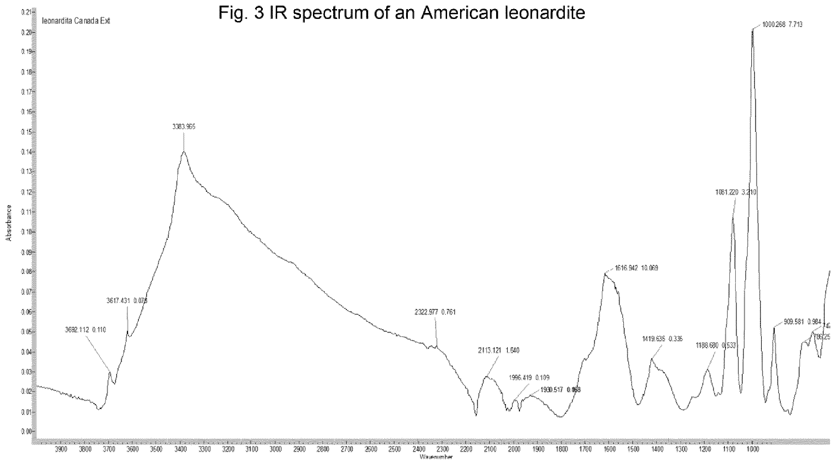

As can be observed in the spectra (Figures 1 to 3), there are significant differences depending on the place of origin of the leonardites in some of the groups that are necessary to obtain minimum reactivity after applying the process of the invention.

The most important IR absorption band for the characterisation of humic acids in all the analysed samples is that at approximately 3400 cm⁻¹ and corresponds to the stretching of the O-H bond of the aliphatic alcohol, phenol or carboxylic acid groups. The bands at 2920 and 2850 cm⁻¹ are characteristic of the stretching of C-H bonds. Absorption at 1720 cm⁻¹ is assigned to the stretching of the C=O bond of the COOH groups. The bands that appear between 1600 and 1650 cm⁻¹ are due to the stretching of the C=O bond in carboxylates, ketones and carboxylic acids. The peak at 1350 cm-1-1400 cm-1 is due to the bending of the aliphatic C-H bond and to the asymmetric stretching of the COO- bond. The bands at 1511 and 1540 cm⁻¹ are due to the stretching of the C=C bond and to deformations of the N-H bond. The relationships between the main FTIR peaks for humic acids are indicative of the degrees of aromaticity and polycondensation. The values of the degree of aromaticity (absorbance ratios 1650/2920 and 1650/2850) and of the degree of polycondensation (1034/2920, 1034/2850 and 1034/1540).

European leonardite (Teruel, Spain) is of special interest to the application of the procedure of the invention and its characteristics were analysed using different methods, particularly with the ratio E4/E6 (this ratio is obtained from measuring and relating the optical density of the extracts of humic substances at wavelengths of 465 nm (E4) and 665 nm (E6)). The interpretation of this ratio indicates that low values thereof imply a high degree of aromaticity, whereas high values indicate a higher content of aliphatic chains. In this regard, Chen and col. (Chen, Y., Senesi, N., Schnitzer, M., Information provided on humic substances by E4 - E6 ratios, Soil Science Society of America Journal, 41(2) 352-358, 1977) indicated that this ratio is highly correlated to the content of free radicals, O, C and COOH, total acidity and molecular weight of the material. These studies made it possible to conclude what groups are responsible for complexing certain metals, with the phenolic groups being responsible for the complexation, together with others that help to carry out said process.

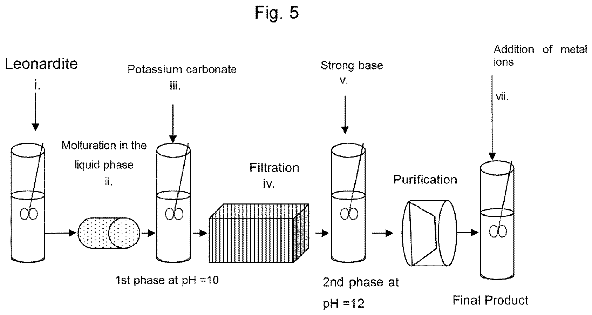

As shown in Fig. 5, the procedure for obtaining humic acids from leonardites in accordance with the invention includes the following stages:
i. Suspension of the leonardite in water;
ii. Molturation of the suspension to achieve a leonardite particle size of 10-70 µm;
iii. Extraction using potassium carbonate at pH 10;
iv. Filtration to remove the insoluble portion;
v. Extraction using a strong base at pH 12-13;
vi. Purification by centrifugation/decantation to remove insoluble products.

In one form of embodiment, the procedure also includes a stage vii) of addition of metal ions in order to obtain a product that includes metal ions complexed with humic acids.

Therefore, once the leonardite has been selected, in stage i) it is suspended in water. In this regard, it should be taken into account that the active surface of the leonardite, together with the important functional groups for a subsequent complexation reaction, is determined to a large extent by particle size. For said reason, the suspension of leonardite in water is treated in stage ii) to reduce the size and, thus, increase the active surface.

Therefore, this stage ii) makes it possible to increase the reactivity of the subsequent reactions by more than 50%, which implies a substantial improvement in comparison with conventional processes. This increase in reactivity facilitates not only the increase in functional groups of interest, but also the next step, which is the first extraction stage.

In one form of embodiment, stage ii) of molturation is performed in mills in the liquid phase, which makes it possible to reduce particle size from 450 µm to 10-70 µm.

Likewise, in another form of embodiment, the proportion by weight of leonardite present in the suspension of stage i) is 20-40% by weight.

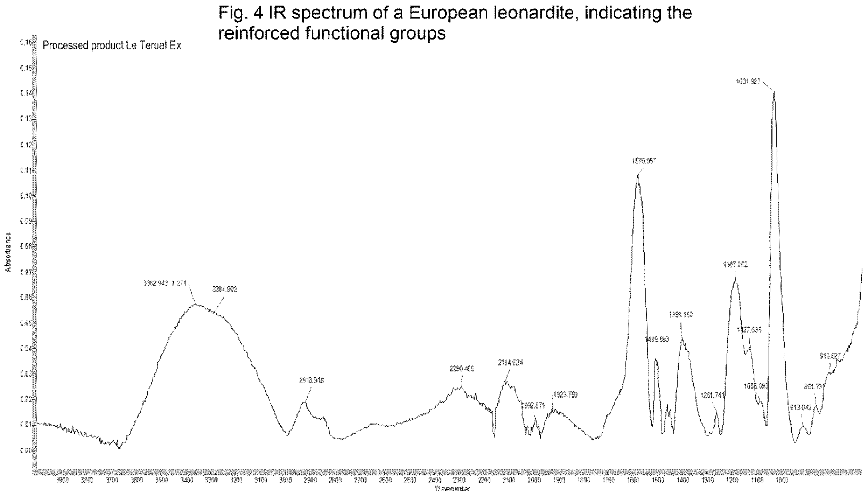

This first extraction of stage iii) is performed using potassium carbonate and controlling the pH at pH=10. This allows the precipitation in the form of carbonates of the different metals that are present in the leonardite and that inactivate different functional groups. In this manner, the intermediate extraction product is "cleaned" to obtain a product with high activity and conditioned, in an additional final phase, so as to be capable of complexing the metal ions of interest, such as different micronutrients. Fig. 4 shows that the functional groups in the indicated wavelength have been reinforced, in addition to those nearby that can favour the complexation of the micronutrients of interest.

In one embodiment of the invention, the proportion of potassium carbonate with respect to the leonardite is 5:1.

Optionally, this stage iii) is followed by a stage iii') that includes the addition of ammonia, maintaining the pH in order to precipitate earth metal ions such as calcium, strontium and barium.

The filtration carried out in stage iv) makes it possible to remove the products precipitated in stage iii) and optionally in stage iii'), concentrating the soluble portion and removing the insoluble portion.

Next, the second extraction is performed in stage v) using a strong base, preferably KOH, to raise the pH to values of 12-13. The objective of this second phase is a second extraction of humic acids.

In order to purify them, the entire product obtained is purified by centrifugation in the purification stage vi) using a decanter centrifuge, removing any possible insoluble portions that may have appeared, which may include precipitates such as magnesium carbonate, which begins to precipitate from pH = 10.8 to pH = 11.8, in addition to other waste products generated.

At this point the product is ready for adding, in the additional stage vii), metal ions of interest. In one form of embodiment, these metal ions are in the form of salts and are preferably micronutrients, particularly iron, manganese and zinc ions, in order to obtain a product that includes these metal ions complexed with humic acids.

The results of the complexation of the metal ions of Fe, Mn and Zn obtained using the procedure of the invention are shown in Table 1 below:

**Table 1**

| | Fe | Mn | Zn |
|---|---|---|---|
| Complexation using a conventional process | 60% | 45% | 25% |
| Complexation using the process of the invention | 95% | 80% | 50% |
| Increase in absolute value | 58% | 78% | 100% |

In comparison with known conventional humic acid extraction processes, the procedure of the invention makes it possible to directly obtain a product formed from a mixture of soluble humic acids and fulvic acids without need for an acidification stage to achieve a fraction soluble in an acid medium formed by fulvic substances, as is customary in the art, providing at the same time, where applicable, an improved product complexed with humic acids and in a shorter period of time, being the main advantages over known processes in the current state of the art.

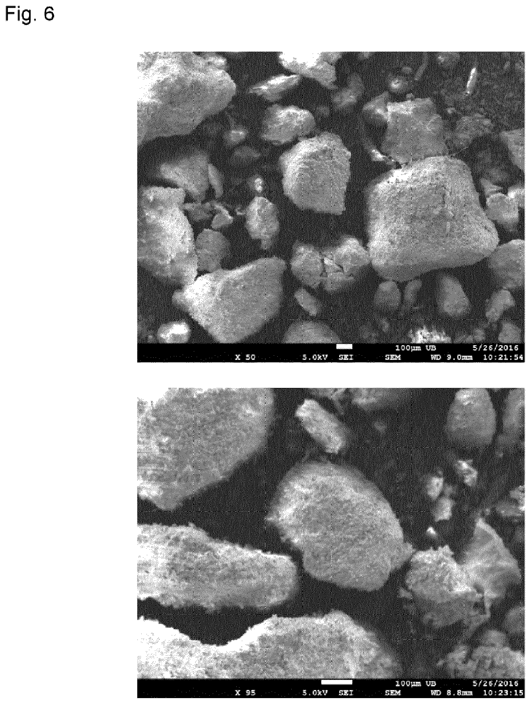

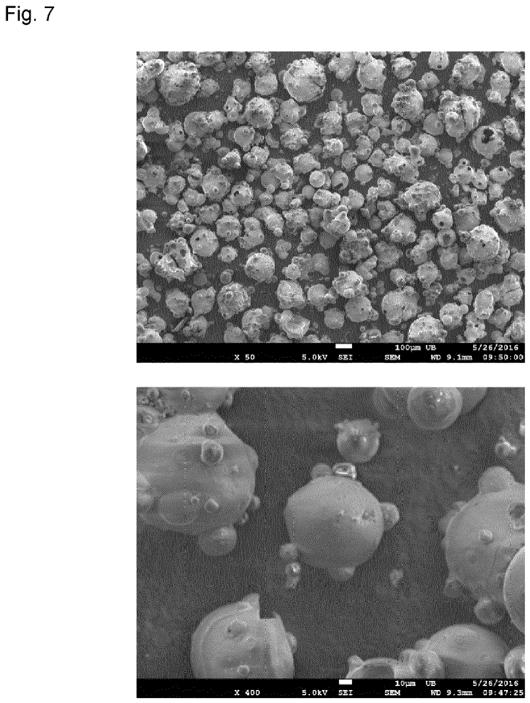

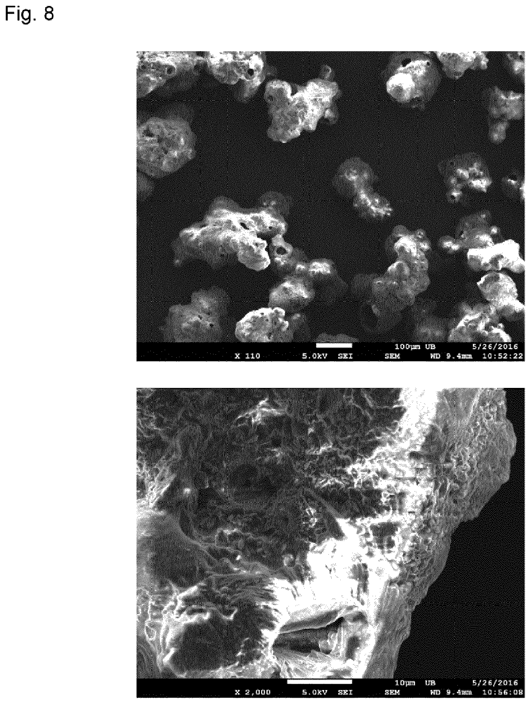

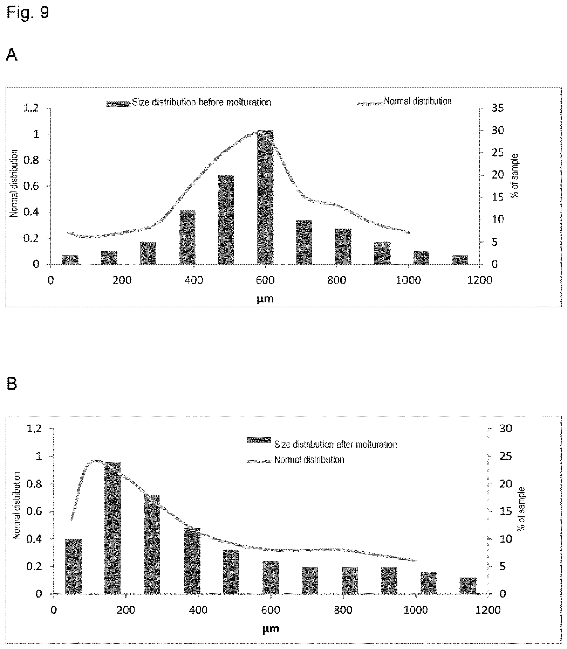

This is evident in reference to Fig. 6, 7 and 8, which show the evolution of leonardite during the process of the invention. The images were taken using an electron microscope and show the reduction in size after the process, in addition to an increase in active surface, both in the external and internal portion, since a greater number of cavities that allow the increase in complexing activity are observed. Likewise, in Fig. 9 the change in particle size distribution after the molturation stage of the process of the invention can be observed.

As regards the time of obtainment of the complexed product, in the following tables this time is shown in hours in relation to the addition of iron ion (Table 2), manganese ion (Table 3) and zinc ion according to a conventional process and applying the procedure of the invention:

**Table 2**

| Iron | Time in hours | | | | | | | |
|---|---|---|---|---|---|---|---|---|
| | 2 | 6 | 10 | 16 | 24 | 32 | 40 | 48 |
| Complexation of iron, conventional process (%) | 25 | 35 | 37 | 42 | 45 | 48 | 52 | 57 |
| Complexation of iron, process of the invention (%) | 29 | 37 | 45 | 55 | 67 | 85 | 90 | 95 |

**Table 3**

| Manganese | Time in hours | | | | | | | |
|---|---|---|---|---|---|---|---|---|
| | 2 | 6 | 10 | 16 | 24 | 32 | 40 | 48 |
| Complexation of manganese, conventional process (%) | 14 | 16 | 18 | 20 | 23 | 24 | 24 | 25 |
| Complexation of manganese, process of the invention (%) | 15 | 19 | 26 | 33 | 38 | 42 | 45 | 50 |

**Table 4**

| Zinc | Time in hours | | | | | | | |
|---|---|---|---|---|---|---|---|---|
| | 2 | 6 | 10 | 16 | 24 | 32 | 40 | 48 |
| Complexation of zinc, conventional process (%) | 15 | 15 | 18 | 22 | 28 | 37 | 40 | 45 |
| Complexation of zinc, process of the invention (%) | 16 | 18 | 32 | 40 | 52 | 65 | 70 | 80 |

As evidenced by the foregoing, the process of the invention makes it possible to achieve a better complexation result in less time.

### Example

An amount of leonardite in the weight ratio 20% to 40% was suspended in 7,000 to 10,000 litres of water. The suspension was agitated to homogenise the sample at between 60 rpm and 120 rpm. Once the sample was approximately homogeneous, molturation was performed in the liquid phase to reduce the size and potassium carbonate was subsequently added in a ratio of 5:1 with respect to the leonardite, until adjusting pH to 10. Next, it was agitated between 2 to 4 hours in order to facilitate the reaction. Ammonia was then added to precipitate other cations and filtered. The filtering process made it possible to eliminate both the cations in the form of carbonates and those formed from the ammonia.

Next, potassium hydroxide was added to the filtered product to raise the pH to 12-13 and complete the extraction of the humic acids and the activation of the functional groups. After a certain period of time had elapsed, the product was centrifuged using a decanter centrifuge to remove the insoluble portion and concentrate the activated part as much as possible, since the insoluble portion was removed. At this point, the metal ions were added, in this case iron, manganese and zinc, and agitation was maintained for a minimum of 24 hours to favour the complexation of the metal ions with the humic acids.

## Claims

1. A procedure for obtaining humic acids with high metal ion complexation capacity, wherein the procedure includes the following stages:
i. suspension of the leonardite in water;
ii. molturation of the suspension to achieve a leonardite particle size of 10-70 mm;
iii. extraction using potassium carbonate at pH 10;
iv. filtration to remove the insoluble portion;
v. extraction using a strong base at pH 12-13;
vi. purification by centrifugation/decantation to remove insoluble products, and wherein an activation of leonardite is achieved in the stage ii in order to increase the reactivity of the subsequent stages in more than 50% without using chemical agents.

2. The procedure for obtaining humic acids with high complexation capacity, according to claim 1, wherein the procedure also includes the stage of adding metal ions in order to obtain a product that includes metal ions complexed with humic acids.

3. The procedure for obtaining humic acids with high complexation capacity, according to claim 2, **characterised in that** the metal ions are added in the form of salts.

4. The procedure for obtaining humic acids with high complexation capacity, according to claim 3, **characterised in that** the salts added are iron, manganese and zinc salts.

5. The procedure for obtaining humic acids with high complexation capacity, according to claim 1 or 2, **characterised in that** the molturation stage reduces particle size from 450 mm to sizes of 10-70 mm.

6. The procedure for obtaining humic acids with high complexation capacity, according to claim 1 or 2, **characterised in that** the proportion by weight of leonardite present in the suspension of stage i) is 20-40% by weight.

7. The procedure for obtaining humic acids with high complexation capacity, according to claim 1 or 2, **characterised in that** the proportion of potassium carbonate with respect to the leonardite is 5:1.

8. The procedure for obtaining humic acids with high complexation capacity, according to claim 1 or 2, **characterised in that** stage iii) is followed by a stage iii') that includes the addition of ammonia, maintaining the pH in order to precipitate earth metal ions.

9. The procedure for obtaining humic acids with high complexation capacity, according to claim 1 or 2, **characterised in that** the strong base used to raise the pH to values of 12-13 is KOH.

## Patentansprüche

1. Verfahren zur Gewinnung von Huminsäuren mit hoher Fähigkeit zur Komplexierung von Metallionen, wobei das Verfahren die folgenden Schritte beinhaltet:
i. Suspension des Leonardits in Wasser;
ii. Verschmelzung der Suspension zur Erzielung einer Leonardit-Partikelgröße von 10-70 mm;
iii. Extraktion unter Verwendung von Kaliumcarbonat bei pH 10;
iv. Filtration zur Entfernung des unlöslichen Anteils;
v. Extraktion unter Verwendung einer starken Base bei pH 12-13;
vi. Reinigung durch Zentrifugieren/Dekantieren zur Entfernung unlöslicher Produkte,
und wobei in der Stufe ii eine Aktivierung des Leonardits erzielt wird, um die Reaktivität der nachfolgenden Stufen um mehr als 50 % zu erhöhen, ohne chemische Mittel einzusetzen.

2. Verfahren zur Gewinnung von Huminsäuren mit hoher Komplexierungsfähigkeit gemäß Anspruch 1, wobei das Verfahren auch den Schritt der Zugabe von Metallionen zur Gewinnung eines Produkts, das mit Huminsäuren komplexierte Metallionen enthält, beinhaltet.

3. Verfahren zur Gewinnung von Huminsäuren mit hoher Komplexierungsfähigkeit gemäß Anspruch 2, **dadurch gekennzeichnet, dass** die Metallionen in Form von Salzen zugegeben werden.

4. Verfahren zur Gewinnung von Huminsäuren mit hoher Komplexierungsfähigkeit gemäß Anspruch 3, **dadurch gekennzeichnet, dass** es sich bei den zugegebenen Salzen um Eisen-, Mangan- und Zinksalze handelt.

5. Verfahren zur Gewinnung von Huminsäuren mit hoher Komplexierungsfähigkeit gemäß Anspruch 1 oder 2, **dadurch gekennzeichnet, dass** die Verschmelzungsstufe die Partikelgröße von 450 mm auf Größen von 10-70 mm reduziert.

6. Verfahren zur Gewinnung von Huminsäuren mit hoher Komplexierungsfähigkeit gemäß Anspruch 1 oder 2, **dadurch gekennzeichnet, dass** der Gewichtsanteil des in der Suspension der Stufe i vorliegenden Leonardits 20-40 Gew.-% beträgt.

7. Verfahren zur Gewinnung von Huminsäuren mit hoher Komplexierungsfähigkeit gemäß Anspruch 1 oder 2, **dadurch gekennzeichnet, dass** das Verhältnis von Kaliumcarbonat zu Leonardit 5:1 beträgt.

8. Verfahren zur Gewinnung von Huminsäuren mit hoher Komplexierungsfähigkeit gemäß Anspruch 1 oder 2, **dadurch gekennzeichnet, dass** auf Stufe iii eine Stufe iii' folgt, die die Zugabe von Ammoniak beinhaltet, wodurch der pH-Wert beibehalten wird, um Erdmetallionen auszufällen.

9. Verfahren zur Gewinnung von Huminsäuren mit hoher Komplexierungsfähigkeit gemäß Anspruch 1 oder 2, **dadurch gekennzeichnet, dass** die zur Anhebung des pH-Werts auf Werte von 12-13 verwendete starke Base KOH ist.

## Revendications

1. Procédure pour obtenir des acides humiques à forte capacité de complexation des ions métalliques, dans laquelle la procédure comporte les étapes suivantes :
i. suspension de la léonardite dans l'eau ;
ii molturation de la suspension pour obtenir une taille de particule de léonardite de 10-70 mm ;
iii. extraction à l'aide de carbonate de potassium à un pH de 10 ;
iv. filtration pour éliminer la partie insoluble ;
v. extraction à l'aide d'une base forte à un pH de 12-13 ;
vi. purification par centrifugation/décantation pour éliminer les produits insolubles, et dans laquelle une activation de la léonardite est obtenue dans l'étape ii afin d'augmenter la réactivité des étapes suivantes de plus de 50 % sans utiliser d'agents chimiques.

2. Procédure pour obtenir des acides humiques à haute capacité de complexation, selon la revendication 1, dans laquelle la procédure comporte également l'étape consistant à ajouter des ions métalliques afin d'obtenir un produit qui comporte des ions métalliques complexés avec des acides humiques.

3. Procédure pour obtenir des acides humiques à haute capacité de complexation, selon la revendication 2, **caractérisée en ce que** les ions métalliques sont ajoutés sous forme de sels.

4. Procédure pour obtenir des acides humiques à haute capacité de complexation, selon la revendication 3, **caractérisée en ce que** les sels ajoutés sont des sels de fer, de manganèse et de zinc.

5. Procédure pour obtenir des acides humiques à haute capacité de complexation, selon la revendication 1 ou 2, **caractérisée en ce que** l'étape de molturation réduit la taille des particules de 450 mm à des tailles de 10 à 70 mm.

6. Procédure pour obtenir des acides humiques à haute capacité de complexation, selon la revendication 1 ou 2, **caractérisée en ce que** la proportion en poids de la léonardite présente dans la suspension de l'étape i) est de 20-40 % en poids.

7. Procédure pour obtenir des acides humiques à haute capacité de complexation, selon la revendication 1 ou 2, **caractérisée en ce que** la proportion du carbonate de potassium par rapport à la léonardite est de 5:1.

8. Procédure pour obtenir des acides humiques à haute capacité de complexation, selon la revendication 1 ou 2, **caractérisée en ce que** l'étape iii) est suivie d'une étape iii') qui comporte l'ajout d'ammoniac, en maintenant le pH afin de précipiter les ions de métaux terreux.

9. Procédure pour obtenir des acides humiques à haute capacité de complexation, selon la revendication 1 ou 2, **caractérisée en ce que** la base forte utilisée pour élever le pH à des valeurs de 12-13 est le KOH.
